(19) Europäisches Patentamt

European Patent Office

Office européen des brevets

(11) **EP 1 180 277 B1**

(12) **EUROPEAN PATENT SPECIFICATION**

(45) Date of publication and mention
of the grant of the patent:
**20.12.2006 Bulletin 2006/51**

(51) Int Cl.:
*H04L 9/30* (2006.01)  *H04L 9/08* (2006.01)

(21) Application number: **00937009.9**

(22) Date of filing: **25.05.2000**

(86) International application number:
**PCT/GB2000/001950**

(87) International publication number:
**WO 2000/072504 (30.11.2000 Gazette 2000/48)**

(54) **PRIVATE KEY RECOVERY**

PRIVATSCHLÜSSELRÜCKGEWINNUNG

EXTRACTION DE CLE PRIVEE

(84) Designated Contracting States:
**AT BE CH CY DE DK ES FI FR GB GR IE IT LI LU
MC NL PT SE**

(30) Priority: **25.05.1999 GB 9911986
12.06.1999 GB 9913601**

(43) Date of publication of application:
**20.02.2002 Bulletin 2002/08**

(73) Proprietor: **Ncipher Corporation Limited
Cambridge CB1 2JD (GB)**

(72) Inventors:
• **HARVEY, Ian,
nCipher Corporation Limited
Cambridge CB1 2JD (GB)**
• **VAN SOMEREN, Nicko,
nCipher Corporation Limited
Cambridge CB1 2JD (GB)**

(74) Representative: **Hallam, Arnold Vincent et al
Marks & Clerk
144 New Walk
Leicester LE1 7JA (GB)**

(56) References cited:
**EP-A- 0 725 512**      **US-A- 4 405 829**

## Description

The present invention relates to key recovery and particularly, but not exclusively, to a method for the recovery of cryptographic keys in secure computer systems.

In business applications, one of the biggest risks when using cryptographic computer systems is that if a legitimate user loses their private "key" then they may be unable to gain access to the cryptographic system. The loss of the key may be as a result of the user forgetting a password or because a member of staff within an organisation has left the organisation taking the key with them.

In order to address this problem many cryptographic systems employ a facility know as "key recovery". This is a process whereby the user can store their key in safe place such that if at some later stage the key is lost it may be recovered by a third party (such as an officer of the organisation). Existing key recovery methods are generally complex involving a large number of steps both on the part of the user and the recovery officer and necessitates the maintenance of an excessive number of storage facilities such as databases.

US-A-4405829 describes a cryptographic communications system which includes a communications channel coupled to at least one terminal having an encoding device and to at least one terminal having a decoding device. A message-to-be-transferred is enciphered to ciphertext at the encoding terminal by first encoding the message as a number M in a predetermined set, and then raising that number to a first predetermined power (associated with the intended receiver) and finally computing the remainder, or residue, C, when the exponentiated number is divided by the product of two predetermined prime numbers (associated with the intended receiver). The residue C is the ciphertext. The ciphertext is deciphered to the original message at the decoding terminal i n a simi lar manner by raising the ciphertext to a second predetermined power (associated with the intended receiver), and then computing the residue, M', when the exponentiated ciphertext is divided by the product of the two predetermined prime numbers associated with the intended receiver. The residue M' corresponds to the original encoded message M.

The present invention aims to provide an improved method for recovering cryptographic keys.

According to a first aspect, the present invention provides a method of cryptographic key generation comprising generating a private key and a public key, wherein said public key contains information about said private key, characterised in that the method comprises: using a recovery public key to generate said private key and said public key such that said public key contains information about said private key whereby said private key can be recovered or regenerated using a recovery private key associated with said recovery public key.

Advantageously, the method further comprises providing said recovery public and private keys.

In a preferred form of the invention the method comprises generating at least one random number; and generating said public and private keys as a function of said random number and said recovery public key; and storing said public key. Generating said public and private keys as a function of said random number and said recovery public key comprises applying a first algorithm to said random number together with said recovery public key thereby to generate said public and private keys.

According to a second aspect, the present invention provides a method of recovering or regenerating a private key wherein said private key and its associated public key have been generated using a recovery public key such that said public key contains information about said private key, characterised in that the method comprises generating said private key from said public key using a recovery private key associated with said recovery public key.

Preferably, generating said private key from said public key using said recovery private key comprises applying an algorithm to said public key together with said recovery private key, thereby to recover or regenerate said private key.

According to a third aspect, the present invention provides a system for generating cryptographic keys characterised by: means for receiving a recovery public key having an associated recovery private key; means for generating a private key and a public key as a function of said recovery public key such that said public key contains information about said private key; and means for storing said public key.

Advantageously, the system further comprises means for receiving said recovery private key; means for recovering said private key using said recovery private key and said information contained in said public key.

Preferably, the generating means comprises means for generating first and second random numbers; a first function unit for applying a first predetermined function to said first random number and said recovery public key thereby to generate a first output value representative of the sum of a first and a second data value; a second functional unit for applying a second predetermined function to said first random number and said recovery public key thereby to generate a second output value; means for combining said second output value and said second random number thereby to generate a third output value representative of the product of said data values; means for calculating said first and second data values and generating fourth and fifth output values in dependence thereon; means for processing said fourth and fifth output values together with a predetermined exponent thereby to generate said private key; and means for processing said fourth and fifth output values only thereby to generate said public key.

According to a fourth aspect, the present invention provides a system for recovering or regenerating a private cryptographic key wherein said private key and its associated public key have been generated using a recovery public key such that said public key contains information about said private key, characterised in that the system comprises: means for receiving said recovery private key; and means for recovering said private key using said recovery private key and said information contained in said public key.

The present invention will now be described, by way of example only, with reference to the accompanying drawings in which;

Figure 1 is a schematic block diagram of a typical key cryptographic computer system including key generation and recovery architecture according to the prior art;

Figure 2 is a block diagram illustrating a method of generating a cryptographic key in the system of figure 1;

Figure 3 is a schematic block diagram of a preferred form of computer system incorporating key generation and recovery architecture according to the invention;

Figure 4 illustrates a preferred method of key generation according to the invention;

Figure 5 illustrates a preferred method of key recovery according to the invention;

Figure 6 illustrates a relationship between the methods of figures 4 and 5; and

Figure 7 is a table of preferred algorithms for use in the methods shown in figures 4 to 6.

In public key cryptographic systems (also know as asymmetric cryptographic systems) a user generates a pair of cryptographic keys, one of which is made available to all other users (known as the public key) and the other of which is kept secret (known as the private key). The public key is used for public functions such as encrypting a message to send to the user or for verifying a digital signature which was supposedly made by that user. The private key, on the other hand is used for private functions such as decrypting a received message or applying a digital signature. The public key will usually be authorised by a body known as a Certification Authority (CA) which stores the public key in a database and distributes it to any other person who may want it. The private key will usually be kept in a safe place and will only be known to the user.

If the user's private key is lost for any reason, the user may be unable to access many applications of the cryptographic system. Consequently, most cryptographic systems feature key recovery mechanisms for recovering lost keys and avoiding data loss. Existing key recovery mechanisms conventionally require a pro-active approach in which extra data must be generated and stored by the user over and above that which is made public.

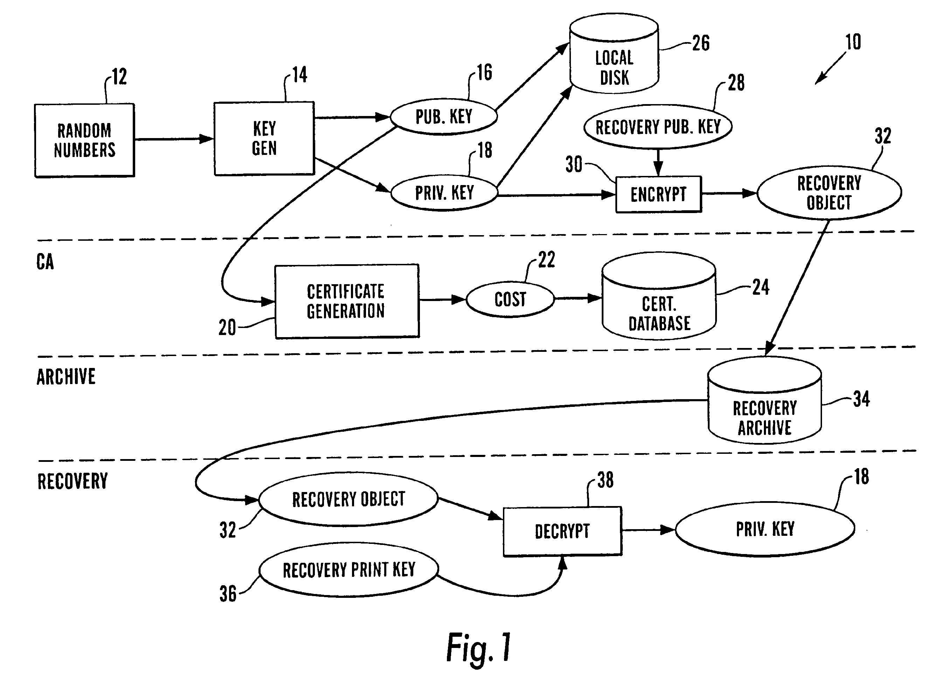

Referring to Figure 1, a typical cryptographic system architecture involving key generation and recovery facilities is shown in schematic block form generally at 10. In the key generation stage a random number generator 12 generates a number which is supplied to a main key generator block 14 which applies one or more predetermined algorithms to the random number in order to generate a public key 16 and a private key 18. The public key 16 is passed to a certification generator 20 which generates a digital certificate 22 of the key and the certificate is then stored in a public database 24.

The user stores a copy of the private key 18 in a local storage device such as hard disc 26. In addition, the private key 18 and a further public key 28 which is held by a third party responsible for key recovery (hereafter "key recovery agent") are applied to an encryption system 30 which generates an encrypted "key archival object" 32 which is then stored in a private key recovery database 34.

If, at a later date, the user needs to recover his private key, the key recovery agent extracts the key archival object 32 from the private key recovery database 34 and applies it, together with the recovery agent's private key 36 to a decryption system 38. The decryption system 38 uses the key archival object 32 and the recovery agent's private key 36 to recover the private key 18.

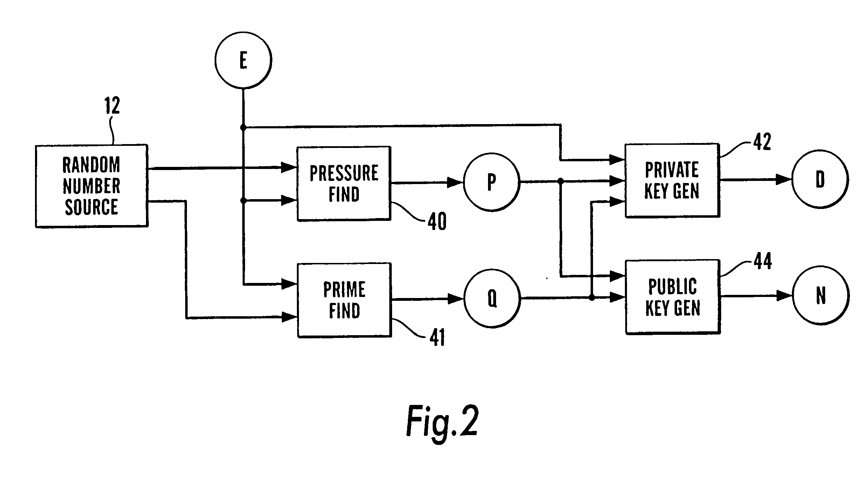

Figure 2 illustrates a standard key generation process for the system of Figure 1. The random number generator 12 feeds into two prime number finders 40, 41 each of which is also supplied with a public exponent E. The outputs P, Q of the prime number finders 40, 41 are applied, together with the public exponent E, into a private key generator 42, forming part of the main key generator block 14. The private key generator 42 generates an output D.

The outputs P, Q of the prime number finders 40, 41 are also fed into a public key generator 44 which generates an output N. The outputs P, Q and D therefore represent the private key 18 and the components E and N represent the public key 16.

The above described system achieves the requirement for key recovery but has a number of disadvantages. For example, the method involves a large number of steps both on the part of the user and the key recovery agent and also requires the maintenance of two databases, one for the digital certificates and one for the key recovery objects. In addition, the user is required explicitly to add their private key to the key recovery database 34.

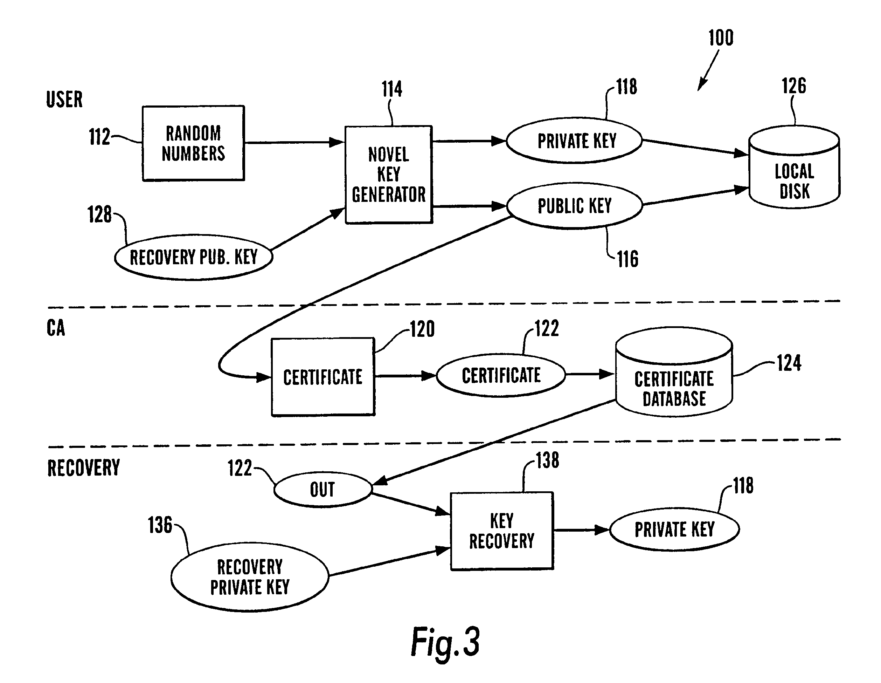

Referring to Figure 3, a preferred form of cryptographic system having key generation and recovery facilities is shown generally at 100. The invention allows the secure key archival to be coupled closely with the key generation and certification process.

In Figure 3, a random number generator 112 generates a random number which is applied, together with the public key of the recovery agent 128 to a main key generator 114. The main key generator generates a public key 116 and a private key 118. As previously, the public key 116 is passed to a certification generator 120 which makes a digital certificate 122 of the public key 116 which is then stored in a public database 124. In addition, the user stores a copy of the private key 118 on a local storage device or hard disc 126. No further action is required on the part of the user since all of the information necessary for key recovery is embedded in the public key 116.

At a later date, if the user needs to recover the private key, a copy of the public key 116 is extracted from the digital certificate 122 stored in the database 124. The copy is passed to a key recovery system 138 together with the recovery agent's private key 136. The key recovery system 138 produces a recovered private key which should be identical to the original private key 118.

It should be noted that if the key generation process is trusted, then the recovery agent's public and private keys can be identical and a symmetrical version of the key generation process and key recovery process can be used.

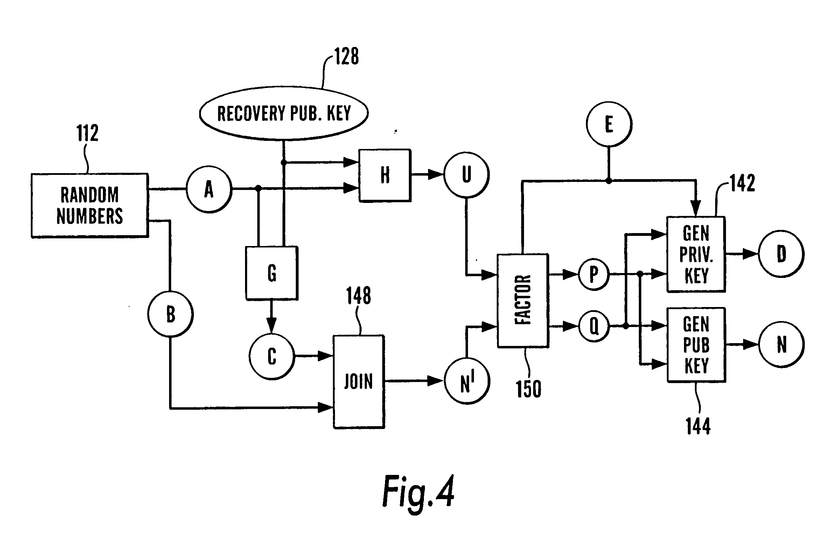

Referring to Figure 4, a key generation mechanism according to the invention is shown in schematic form. In this mechanism, the random number generator 112 generates two random values A and B. The value A is sent to a functional unit designated H along with the recovery agent's public key 128. The output of the unit H is a value U. The value A and the recovery agent's public key 128 are also applied to a second functional unit G which generates a value C. The values B and C are combined in a joiner unit 148 in such a way that the data of the value C represents the output N' of the joiner unit 148 while the data of value B represent the less significant bit of N'. The values U, N' are then applied to a factorisation unit 150 together with the public exponent E in the following manner:

N' and U are assumed to represent respectively the product and the sum of data P' and Q' and the values of these are computed using basic mathematical relationships. The factorisation unit 150 then searches for the value P which is the smallest prime number greater than or equal to P' which is suitable for use in a cryptographic key. The factorisation unit 150 then searches for a value Q which is the largest prime number less than or equal to Q' which is also suitable for use in a key.

Once the factorisation unit 150 has output the values P and Q, they are processed by a public key generator 144, which forms part of the main key generator block 114, to produce the public value N. The values P and Q are also applied with the public exponent E to the private key generator 142, also forming part of the main key generator block 114, to generate the value D. These processes are similar to those of Figure 2.

A check is then made that the more significant bits of N are the same as the more significant bits of N'. If this is not the case, then the process is restarted. The final public key is represented by the components E and N while the private key 118 is represented by the components P, Q and D as in the case of Figure 2.

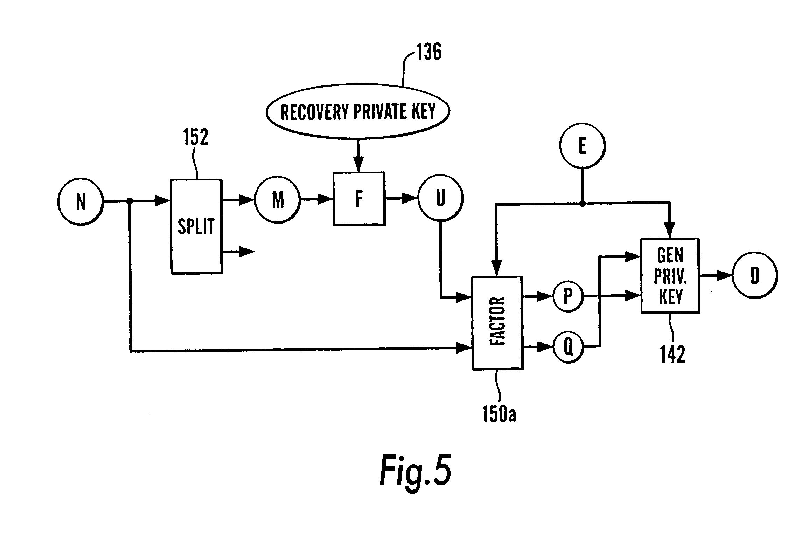

Referring to Figure 5, a key recovery process according to the invention is shown in schematic form. In this process, the value N is taken from the public key 116 and split by a splitter unit 152 into two parts, a part containing the more significant bits and a part containing the less significant bits. It should be noted that this is the reverse process of the joiner unit 148 illustrated in Figure 4. The less significant bits are discarded. The more significant bits, designated M, are fed into a third functional unit F along with the recovery agent's private key 136 to produce a value U. The values U and N are passed to another factorisation unit 150a which produces values P and Q. The values P and Q are applied, together with the value E extracted from the public key 116, into the private key generation unit 142 to produce the value D. This is similar to the process involved in key generation. The components P, Q and D represent the recovered private key.

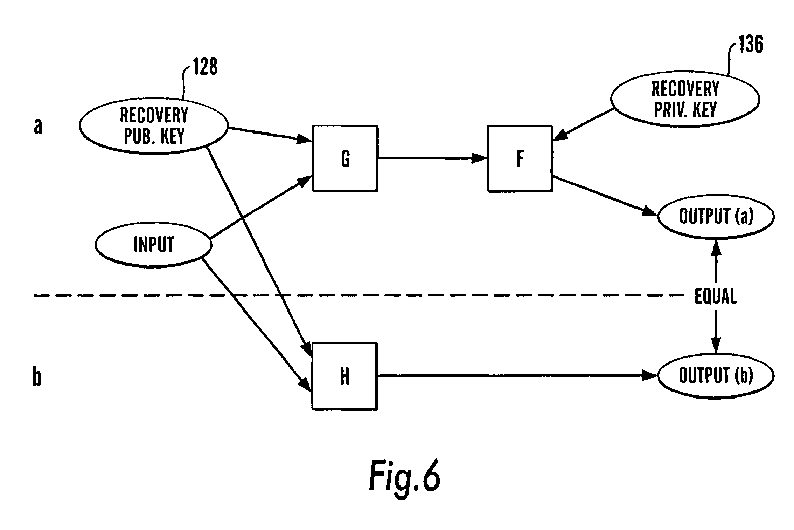

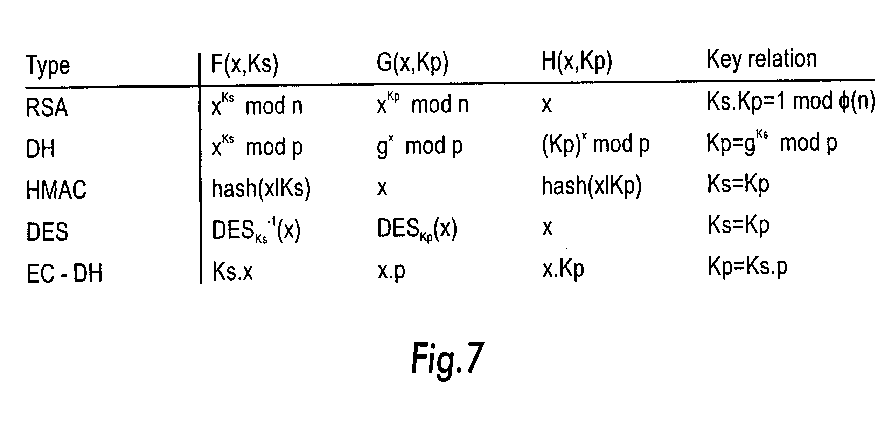

Referring to Figure 6, the relationship between the functional units F, G and H is shown in schematic form. The three functional units satisfy the following criteria. Functional units H and G are applied with an input and the public key of the recovery agent 128. Functional unit F is presented with the recovery agent's private key 136 and the output of unit G. Unit F must produce the same output value as unit H when both units G and H have the same input. The functional units F, G and H in the key generation and recovery processes can take a number of forms. These forms are shown in the table of Figure 7. Many variants could be used here, for example, the function sets for RSA or DH could be replaced with versions of these algorithms based on elliptic curve encryption. Furthermore, various different HMAC or symmetric encryption mechanisms could be used in place of the ones shown in Figure 7.

In a preferred form of the invention, the following algorithm is used to generate or recover a key. The key generation algorithm provides built in key recovery and knowledge of the details of the key generation process together with a generated public key is not sufficient to derive the private key. This is very important for preventing unauthorised parties from establishing the private key and gaining access to the system.

Prior to generating the key, three functions are selected. The function F(x, Ks) makes use of the key recovery agent's private key while the functions G(x, Kp) and H(x, Kp) make use of the agent's public key. The three functions together satisfy the relationship:

$$F(G(x, Kp), Ks) = H(x, Kp)$$

and the function G( ) must be a "one-way" function i.e. given the output of the function, it is difficult or impossible to compute the input, but given the input it is easy to compute the output.

The steps for generating a key are as follows:

1. Select a random value x and compute G(x, Kp) and H(x, Kp);

2. Concatenate a one bit, G(x, Kp) and a random value s to generate N' such that: $msbits(N') = G(x, Kp)$, where $msbits(N')$ is a function which takes a number and returns the most significant 3m/8 of the bits in the binary representation of that number excluding the most significant and where m is the number of bits in the key;

3. Let U = #(H(x, Kp)) where #( ) is a hash function;

4. Check that $2N' < U < (2N'/r) + (r/2)$ where $r = 2^{(m/2)}$ and if not, return to step two;

5. Assume that U = (P+Q) so compute that $V = (P-Q) = (u^2 - 4N')^{1/2}$;

6. Starting at P = (U + V)/2 to search upwards until P is prime;

7. Starting at Q = (U - V)/2, search downwards until Q is prime;

8. Ensure that $msbits(PQ) = msbits(N')$; if not start again;

9. Use P and Q to generate the private key using the standard method.

For recovery of the key, the method involves the following steps;

1. Let $U = \#(F(msbits(N), Ks))$;

2. Assume that U = (P + Q), therefore compute $V = (P - Q) (U^2 - 4N')^{1/2}$;

3. Starting at P = (U + V)/2 search upwards P is prime;

4. Calculate Q = N/P and generate the private key in the standard manner.

Referring to Figure 7, this is a table illustrating some possible functions for use with the above algorithm. This algorithm allows for the secure generation of public and private keys with the property that, by the use of some additional information independent of the key, the private key can be recovered from the public key. The algorithm does not require the key generator to have any knowledge of the recovery parameter but instead uses a public key system to separate the generation and the recovery parameters.

This could be used for a variety of key recovery applications. In most systems, the public key will be more widely known than the private key and therefore much less likely to be lost. The implicit nature of this key recovery system removes the need for action by the user to explicitly store their private key, for example, in a separate database.

It can be seen that the present invention provides a method of recovering a cryptographic key which is greatly simplified compared to existing methods and a cryptographic computer system employing such a method. Several steps are removed from the previous method and the user is no longer required to archive their private key. The invention also removes the need for a separate key recovery database. The new key generation process is designed such that the keys produced are functionally identical to the output of the standard key generation process. Thus, the method of the present invention can be incorporated into existing applications which make use of public key cryptography with little or no change to the application.

## Claims

1. A method of cryptographic key generation comprising generating a private key (118) and a public key (116), wherein said public key (116) contains information about said private key (118), **characterised in that** the method comprises:
using a recovery public key (128) to generate said private key (118) and said public key (116) whereby said private key (118) can be recovered or regenerated using a recovery private key (136) associated with said recovery public key (128).

2. A method of cryptographic key generation according to claim 1 comprising providing said recovery public key (128).

3. A method of cryptographic key generation according to claim 1 comprising providing said recovery public and private keys (128, 136).

4. A method of cryptographic key generation according to claim 1, 2 or 3 comprising:

generating at least one random number;
and generating said public and private keys (116,118) as a function of said random number and said recovery public key (128);
and storing said public key (116).

5. A method of cryptographic key generation according to claim 4 wherein generating said public and private keys (116, 118) as a function of said random number and said recovery public key (128) comprises applying a first algorithm to said random number together with said recovery public key (128) thereby to generate said public and private keys (116, 118).

6. A method of cryptographic key generation as claimed in any preceding claim further comprising:

retrieving said public key (116);
and generating said private key (118) from said public key (116) using said recovery private key (136).

7. A method of cryptographic key generation as claimed in claim 6 wherein generating said private key (118) from said public key (116) to using said recovery private key (136) comprises applying a second algorithm to said public key (116) together with said recovery private key (136), thereby to recover or regenerate said private key (118).

8. A method of cryptographic key generation according to claim 7 wherein said first and second algorithms are symmetrical.

9. A method of cryptographic key generation according to any of the preceding claims wherein said private and recovery public keys (128) are known only to an authorised third party.

10. A method of recovering or regenerating a private key (118) wherein said private key (118) and its associated public key (116) have been generated using a recovery public key (128) such that said public key (116) contains information about said private key (118), **characterised in that** the method comprises regenerating said private key (118) from said information contained in said public key (116) using a recovery private key (136) associated with said recovery public key (128).

11. A method of recovering or regenerating a private key (118) as claimed in claim 10 wherein generating said private key (118) from said public key (116) using said recovery private key (136) comprises applying an algorithm to said public key (116) together with said recovery private key (136), thereby to recover or regenerate said private key (118).

12. A system for generating cryptographic keys **characterised by**:

    means (128) for receiving a recovery public key (128) having an associated recovery private key (136);
    means (114) for generating a private key (118) and a public key (116) as a function of said recovery public key (128) such that said public key (116) contains information about said private key (118) whereby said private key (118) can be recovered or regenerated using said recovery private key (136);
    and means (126) for storing said public key (116).

13. A system for generating cryptographic keys as claimed in claim 12 comprising:

    means (136) for receiving said recovery private key (136);
    means (138) for recovering said private key (118) using said recovery private key (136) and said information contained in said public key (116).

14. A system for generating cryptographic keys according to claim 12 or 13 wherein said generating means (114) comprises means for generating first and second random numbers (A, B);
a first function unit (H) for applying a first predetermined function to said first random number (A) and said recovery public key (128) thereby to generate a first output value (U) representative of the sum of a first and a second data value;
a second functional unit (G) for applying a second predetermined function to said first random number (A) and said recovery public key (128) thereby to generate a second output value (C);
means (148) for combining said second output value (C) and said second random number (B) thereby to generate a third output value (N') representative of the product of said data values;
means (150) for calculating said first and second data values and generating fourth and fifth output values (P, Q) in dependence thereon;
means (142) for processing said fourth and fifth output values (P, Q) together with a predetermined exponent (E) thereby to generate said private key (118); and
means (144) for processing said fourth and fifth output values (P, Q) only thereby to generate said public key (116).

15. A system for generating cryptographic keys according to claim 14 wherein said recovering means comprises means (152) for splitting said public key (116) into first (M) and second parts;
a third functional unit (F) for applying a third predetermined function to said first part (M) together with said recovery private key (136) thereby to generate said first output value (U);
means (150a) for calculating said first and second data values (P, Q) from said first output value (U) and said public key (116); and
means (142) for processing said first and second variables (P, Q) together with said first predetermined exponent (E) thereby to recover or regenerate said private key (118).

16. A system for recovering or regenerating a private cryptographic key wherein said private key (118) and its associated public key (116) have been generated using a recovery public key (128) such that said public key (116) contains information about said private key (118), **characterised in that** the system comprises:

means for receiving a recovery private key (136);
and means for recovering said private key (118) using said recovery private key (136) and said information contained in said public key (116).

17. A system according to claim 16 for recovering or regenerating a private cryptographic key generated wherein said private cryptographic key has been generated using the system of claim 14 or 15 wherein:

said recovering means comprises:
means (152) for splitting said public key (116) into first (M) and second parts;
means (136) for receiving said recovery private key (136);
a functional unit (F) for applying a third predetermined function to said first part (M) together with said recovery private key (136) thereby to generate said first output value (U);
means (150a) for calculating said first and second data values (P, Q) from said first output value (U) and said public key (116);
means (E) for receiving said first predetermined exponent;
and means (142) for processing said first and second variables (P, Q) together with said first predetermined exponent (E) thereby to recover or regenerate said private key (118).

**Patentansprüche**

1. Verfahren zur Generierung des Dekodier-Schlüssels, das das Generieren eines Private Key (118) und eines Public Key (116) aufweist, wobei der Public Key (116) eine Information über den Private Key (118) enthält, **dadurch gekennzeichnet, dass** das Verfahren aufweist:

die Verwendung eines Recovery-Public-Key (128), um den Private Key (118) und den Public Key (116) zu generieren, wobei der Private Key (118) bei Verwendung eines Recovery-Private-Key (136), der mit dem Recovery-Public-Key (128) in Verbindung steht, wiederhergestellt oder regeneriert werden kann.

2. Verfahren zur Generierung des Dekodier-Schlüssels nach Anspruch 1, das das Bereitstellen des Recovery-Public-Key (128) aufweist.

3. Verfahren zur Generierung des Dekodier-Schlüssels nach Anspruch 1, das das Bereitstellen des Recovery-Public-Key und Recovery-Private-Key (128, 136) aufweist.

4. Verfahren zur Generierung des Dekodier-Schlüssels nach Anspruch 1, 2 oder 3, das die folgenden Schritte aufweist:

Generieren von mindestens einer Zufallszahl; und
Generieren des Public Key und Private Key (116, 118) als eine Funktion der Zufallszahl und des Recovery-Public-Key (128); und
Speichern des Publik Key (116).

5. Verfahren zur Generierung des Dekodier-Schlüssels nach Anspruch 4, bei dem das Generieren des Public Key und Private Key (116, 118) als eine Funktion der Zufallszahl und des Recovery-Public-Key (128) das Anwenden eines ersten Algorithmus bei der Zufallszahl zusammen mit dem Recovery-Public-Key (128) aufweist, um dadurch den Public Key und Private Key (116, 118) zu generieren.

6. Verfahren zur Generierung des Dekodier-Schlüssels nach einem der vorhergehenden Ansprüche, das außerdem die folgenden Schritte aufweist:

Wiederauffinden des Public Key (116); und
Generieren des Private Key (118) aus dem Public Key (116) bei Verwendung des Recovery-Private-Key (136).

7. Verfahren zur Generierung des Dekodier-Schlüssels nach Anspruch 6, bei dem das Generieren des Private Key (118) aus dem Public Key (116) bei Verwendung des Recovery-Private-Key (136) das Anwenden eines zweiten Algorithmus beim Public Key (116) zusammen mit dem Recovery-Private-Key (136) aufweist, um dadurch den Private Key (118) wiederherzustellen oder zu regenerieren.

8. Verfahren zur Generierung des Dekodier-Schlüssels nach Anspruch 7, bei dem der erste und der zweite Algorithmus symmetrisch sind.

9. Verfahren zur Generierung des Dekodier-Schlüssels nach einem der vorhergehenden Ansprüche, bei dem der Private- und der Recovery-Public-Key (128) nur einer befugten dritten Partei bekannt sind.

10. Verfahren zur Wiederherstellung oder Regenerierung eines Private Key (118), bei dem der Private Key (118) und sein dazugehörender Public Key (116) bei Verwendung eines Recovery-Public-Key (128) generiert wurde, so dass der Public-Key (116) eine Information über den Private Key (118) enthält, **dadurch gekennzeichnet, dass** das Verfahren das Regenerieren des Private Key (118) aus der im Public Key (116) enthaltenen Information bei Anwendung eines Recovery-Private-Key (136) in Verbindung mit dem Recovery-Public-Key (128) aufweist.

11. Verfahren zur Wiederherstellung oder Regenerierung eines Private Key (118) nach Anspruch 10, bei dem das Generieren des Private Key (118) aus dem Public Key (116) bei Verwendung des Recovery-Private-Key (136) das Anwenden eines Algorithmus beim Public Key (116) zusammen mit dem Recovery-Private-Key (136) aufweist, um dadurch den Private Key (118) wiederherzustellen oder zu regenerieren.

12. System für das Generieren von Dekodier-Schlüsseln, **gekennzeichnet durch**:

   eine Einrichtung (128) für das Empfangen eines Recovery-Public-Key (128) mit einem dazugehörenden Recovery-Private-Key (136);
   eine Einrichtung (114) für das Generieren eines Private Key (118) und eines Public Key (116) als eine Funktion des Recovery-Public-Key (128), so dass der Public Key (116) eine Information über den Private Key (118) enthält, wobei der Private Key (118) bei Verwendung des Recovery-Private-Key (136) wiederhergestellt oder regeneriert werden kann; und
   eine Einrichtung (126) für das Speichern des Public Key (116).

13. System für das Generieren von Dekodier-Schlüsseln nach Anspruch 12, das aufweist:

   eine Einrichtung (136) für das Empfangen des Recovery-Private-Key (136);
   eine Einrichtung (138) für das Wiederherstellen des Private Key (118) bei Verwendung des Recovery-Private-Key (136) und der im Public Key (116) enthaltenen Information.

14. System für das Generieren von Dekodier-Schlüsseln nach Anspruch 12 oder 13, bei dem die Generierungseinrichtung (114) aufweist:

   eine Einrichtung für das Generieren einer ersten und zweiten Zufallszahl (A, B);
   eine erste Funktionseinheit (H) für das Anwenden einer ersten vorgegebenen Funktion bei der ersten Zufallszahl (A) und dem Recovery-Public-Key (128), um dadurch einen ersten Ausgangswert (U) zu generieren, der für die Summe eines ersten und eines zweiten Datenwertes repräsentativ ist;
   eine zweite Funktionseinheit (G) für das Anwenden einer zweiten vorgegebenen Funktion bei der ersten Zufallszahl (A) und dem Recovery-Public-Key (128), um dadurch einen zweiten Ausgangswert (C) zu generieren;
   eine Einrichtung (148) für das Kombinieren des zweiten Ausgangswertes (C) und der zweiten Zufallszahl (B), um dadurch einen dritten Ausgangswert (N') zu generieren, der für das Produkt der Datenwerte repräsentativ ist;
   eine Einrichtung (150) für das Berechnen des ersten und zweiten Datenwertes und das Generieren eines vierten und fünften Ausgangswertes (P, Q) in Abhängigkeit davon;
   eine Einrichtung (142) für die Verarbeitung des vierten und fünften Ausgangswertes (P, Q) zusammen mit einem vorgegebenen Exponenten (E), um dadurch den Private Key (118) zu generieren; und
   eine Einrichtung (144) für die Verarbeitung des vierten und fünften Ausgangswertes (P, Q), nur um dadurch den Public Key (116) zu generieren.

15. System für das Generieren von Dekodier-Schlüsseln nach Anspruch 14, bei dem die Wiederherstellungseinrichtung aufweist: eine Einrichtung (152) für das Aufspalten des Public Key (116) in einen ersten (M) und einen zweiten Teil;
   eine dritte Funktionseinheit (F) für das Anwenden einer dritten vorgegebenen Funktion beim ersten Teil (M) zusammen mit dem Recovery-Private-Key (136), um dadurch den ersten Ausgangswert (U) zu generieren;
   eine Einrichtung (150a) für das Berechnen des ersten und zweiten Datenwertes (P, Q) aus dem ersten Ausgangswert (U) und den Public-Key (116); und
   eine Einrichtung (142) für die Verarbeitung der ersten und zweiten Veränderlichen (P, Q) zusammen mit dem ersten vorgegebenen Exponenten (E), um dadurch den Private Key (118) wiederherzustellen oder zu regenerieren.

16. System für das Wiederherstellen oder Regenerieren eines privaten Dekodier-Schlüssels, bei dem der Private Key (118) und sein dazugehörender Public Key (116) bei Verwendung eines Recovery-Public-Key (128) generiert wurden, so dass der Public Key (116) eine Information über den Private Key (118) enthält, **dadurch gekennzeichnet, dass** das System aufweist:

   eine Einrichtung für das Empfangen eines Recovery-Private-Key (136); und
   eine Einrichtung für das Wiederherstellen des Private Key (118) bei Verwendung des Recovery-Private-Key (136) und der Information, die im Public Key (116) enthalten ist.

17. System nach Anspruch 16 für das Wiederherstellen oder Regenerieren eines privaten Dekodier-Schlüssels der generiert wird, bei dem der private Dekodier-Schlüssel bei Verwendung des Systems nach Anspruch 14 oder 15 generiert wurde, bei dem:

die Wiederherstellungseinrichtung aufweist:

eine Einrichtung (152) für das Aufspalten des Public Key (116) in einen ersten (M) und zweiten Teil;

eine Einrichtung (136) für das Empfangen des Recovery-Private-Key (136);

eine Funktionseinheit (F) für das Anwenden einer dritten vorgegebenen Funktion beim ersten Teil (M) zusammen mit dem Recovery-Private-Key (136), um dadurch den ersten Ausgangswert (U) zu generieren;

eine Einrichtung (150a) für das Berechnen des ersten und zweiten Datenwertes (P, Q) aus dem ersten Ausgangswert (U) und dem Public Key (116);

eine Einrichtung (E) für das Empfangen des ersten vorgegebenen Exponenten; und

eine Einrichtung (142) für die Verarbeitung der ersten und zweiten Veränderlichen (P, Q) zusammen mit dem ersten vorgegebenen Exponenten (E), um dadurch den Private Key (118) wiederherzustellen oder zu regenerieren.

## Revendications

1. Procédé de génération de clé cryptographique comprenant l'étape consistant à générer une clé privée (118) et une clé publique (116), dans lequel ladite clé publique (116) contient des informations concernant ladite clé privée (118), **caractérisé en ce que** le procédé comprend l'étape consistant à:

utiliser une clé publique de restauration (128) pour générer ladite clé privée (118) et ladite clé publique (116), moyennant quoi ladite clé privée (118) peut être restaurée ou régénérée au moyen d'une clé privée de restauration (136) associée à ladite clé publique de restauration (128).

2. Procédé de génération de clé cryptographique selon la revendication 1, comprenant l'étape consistant à fournir ladite clé publique de restauration (128).

3. Procédé de génération de clé cryptographique selon la revendication 1, comprenant l'étape consistant à fournir lesdites clés publique et privée de restauration (128, 136).

4. Procédé de génération de clé cryptographique selon la revendication 1, 2 ou 3, comprenant les étapes consistant à:

générer au moins un nombre aléatoire; et générer lesdites clés publique et privée (116, 118) en fonction dudit nombre aléatoire et de ladite clé publique de restauration (128); et stocker ladite clé publique (116).

5. Procédé de génération de clé cryptographique selon la revendication 4, dans lequel l'étape consistant à générer lesdites clés publique et privée (116, 118) en fonction dudit nombre aléatoire et ladite clé publique de restauration (128) comprend l'application d'un premier algorithme audit nombre aléatoire en même temps que ladite clé publique de restauration (128) pour générer ainsi lesdites clés publique et privée (116, 118).

6. Procédé de génération de clé cryptographique selon l'une quelconque des revendications précédentes, comprenant en outre les étapes consistant à:

extraire ladite clé publique (116); et générer ladite clé privée (118) à partir de ladite clé publique (116) au moyen de ladite clé privée de restauration (136).

7. Procédé de génération de clé cryptographique selon la revendication 6, dans lequel l'étape consistant à générer ladite clé privée (118) à partir de ladite clé publique (116) en utilisant ladite clé privée de restauration (136) comprend l'application d'un deuxième algorithme à ladite clé publique (116) ainsi qu'à ladite clé privée de restauration (136), afin de restaurer ainsi ou de régénérer ladite clé privée (118).

8. Procédé de génération de clé cryptographique selon la revendication 7, dans lequel lesdits premier et deuxième algorithmes sont symétriques.

9. Procédé de génération de clé cryptographique selon l'une quelconque des revendications précédentes, dans lequel lesdites clés privée et publique de restauration (128) sont connues seulement d'une tierce partie autorisée.

10. Procédé de restauration ou de régénération d'une clé privée (118), dans lequel ladite clé privée (118) et sa clé publique associée (116) ont été générées au moyen d'une clé publique de restauration (128) de sorte que ladite clé publique (116) contient des informations concernant ladite clé privée (118), **caractérisé en ce que** le procédé comprend la régénération de ladite clé privée (118) à partir desdites informations contenues dans ladite clé publique (116) en utilisant une clé privée de restauration (136) associée à ladite clé publique de restauration (128).

11. Procédé de restauration ou de régénération d'une clé privée (118) selon la revendication 10, dans lequel l'étape consistant à générer ladite clé privée (118) à partir de ladite clé publique (116) en utilisant ladite clé privée de restauration (136) comprend l'application d'un algorithme à ladite clé publique (116) ainsi qu'à ladite clé privée de restauration (136), afin de restaurer ou de régénérer ainsi ladite clé privée (118).

**12.** Système de génération de clés cryptographiques **caractérisé par**:

un moyen (128) pour recevoir une clé publique de restauration (128) ayant une clé privée de restauration associée (136);
un moyen (114) pour générer une clé privée (118) et une clé publique (116) en fonction de ladite clé publique de restauration (128) de sorte que ladite clé publique (116) contient des informations concernant ladite clé privée (118), moyennant quoi ladite clé privée (118) peut être restaurée ou régénérée au moyen de ladite clé privée de restauration (136);
et un moyen (126) pour stocker ladite clé publique (116).

**13.** Système de génération de clés cryptographiques selon la revendication 12, comprenant:

un moyen (136) pour recevoir ladite clé privée de restauration (136);
un moyen (138) pour restaurer ladite clé privée (118) au moyen de ladite clé privée de restauration (136) et desdites informations contenues dans ladite clé publique (116).

**14.** Système de génération de clés cryptographiques selon la revendication 12 ou 13, dans lequel ledit moyen de génération (114) comprend un moyen pour générer des premier et deuxième nombres aléatoires (A, B);
une première unité fonctionnelle (H) pour appliquer une première fonction prédéterminée audit premier nombre aléatoire (A) et à ladite clé publique de restauration (128) afin de générer une première valeur de sortie (U) représentative de la somme d'une première et d'une deuxième valeur de données;
une deuxième unité fonctionnelle (G) pour appliquer une deuxième fonction prédéterminée audit premier nombre aléatoire (A) et à ladite clé publique de restauration (128) afin de générer ainsi une deuxième valeur de sortie (C);
un moyen (148) pour combiner ladite deuxième valeur de sortie (C) et ledit deuxième nombre aléatoire (B) afin de générer ainsi une troisième valeur de sortie (N') représentative du produit desdites valeurs de données;
un moyen (150) pour calculer lesdites première et deuxième valeurs de données et générer en fonction de celles-ci des quatrième et cinquième valeurs de sortie (P, Q);
un moyen (142) pour traiter lesdites quatrième et cinquième valeurs de sortie (P, Q) en même temps qu'un exposant prédéterminé (E) afin de générer ainsi ladite clé privée (118); et
un moyen (144) pour traiter lesdites quatrième et cinquième valeurs de sortie (P, Q) seulement pour générer ainsi ladite clé publique (116).

**15.** Système de génération de clés cryptographiques selon la revendication 14, dans lequel ledit moyen de restauration comprend un moyen (152) pour séparer ladite clé publique (116) en des première (M) et deuxième parties;
une troisième unité fonctionnelle (F) pour appliquer une troisième fonction prédéterminée à ladite première partie (M) en même temps que ladite clé privée de restauration (136) afin de générer ainsi ladite première valeur de sortie (U);
un moyen (150a) pour calculer lesdites première et deuxième valeurs de données (P, Q) à partir de ladite première valeur de sortie (U) et de ladite clé publique (116); et
un moyen (142) pour traiter lesdites première et deuxième variables (P, Q) avec ledit premier exposant prédéterminé (E) afin de restaurer ou de régénérer ainsi ladite clé privée (118).

**16.** Système de restauration ou de régénération d'une clé cryptographique privée, dans lequel ladite clé privée (118) et sa clé publique associée (116) ont été générées au moyen d'une clé publique de restauration (128) de sorte que ladite clé publique (116) contient des informations concernant ladite clé privée (118), **caractérisé en ce que** le système comprend:

un moyen pour recevoir une clé privée de restauration (136);
et un moyen pour restaurer ladite clé privée (118) en utilisant ladite clé privée de restauration (136) et lesdites informations contenues dans ladite clé publique (116).

**17.** Système selon la revendication 16, de restauration ou de régénération d'une clé cryptographique privée générée, dans lequel ladite clé cryptographique privée a été générée en utilisant le système selon la revendication 14 ou 15, dans lequel:

ledit moyen de restauration comprend:

un moyen (152) pour séparer ladite clé publique (116) en une première (M) et une deuxième partie;
un moyen (136) pour recevoir ladite clé privée de restauration (136);
une unité fonctionnelle (F) pour appliquer une troisième fonction prédéterminée à ladite première partie (M) en même temps que ladite clé privée de restauration (136) afin de générer ainsi ladite première valeur de sortie (U);

un moyen (150a) pour calculer lesdites première et deuxième valeurs de données (P, Q) à partir de ladite première valeur de sortie (U) et de ladite clé publique (116);

un moyen (E) pour recevoir ledit premier exposant prédéterminé;

et un moyen (142) pour traiter lesdites première et deuxième variables (P, Q) en même temps que ledit premier exposant prédéterminé (E) afin de restaurer ou de régénérer ainsi ladite clé privée (118).

Fig.1

Fig.2

EP 1 180 277 B1

USER

112 —○ RANDOM NUMBERS

114
NOVEL KEY GENERATOR

118
PRIVATE KEY

100

126
LOCAL DISK

128 ○— RECOVERY PUB. KEY

116
PUBLIC KEY

CA

120
CERTIFICATE

122
CERTIFICATE

124
CERTIFICATE DATABASE

RECOVERY

122
OUT

138
KEY RECOVERY

118
PRIVATE KEY

136
RECOVERY PRIVATE KEY

*Fig.3*

Fig.4

Fig.5

*Fig.6*

EP 1 180 277 B1

| Type | F(x,Ks) | G(x,Kp) | H(x,Kp) | Key relation |
|---|---|---|---|---|
| RSA | $x^{Ks}$ mod n | $x^{Kp}$ mod n | x | Ks.Kp=1 mod $\phi$(n) |
| DH | $x^{Ks}$ mod p | $g^x$ mod p | $(Kp)^x$ mod p | Kp=$g^{Ks}$ mod p |
| HMAC | hash(xlKs) | x | hash(xlKp) | Ks=Kp |
| DES | $DES_{Ks}^{-1}(x)$ | $DES_{Kp}(x)$ | x | Ks=Kp |
| EC - DH | Ks.x | x.p | x.Kp | Kp=Ks.p |

*Fig.7*

EP 1 180 277 B1